# EUROPÄISCHE PATENTSCHRIFT

(11) **EP 4 034 490 B1**
(45) Veröffentlichungstag und Bekanntmachung des Hinweises auf die Patenterteilung: **05.03.2025**
(21) Anmeldenummer: 20775232.0
(22) Anmeldetag: 16.09.2020
(51) Int. Cl.: B67C 3/20, B25J 21/02, B65B 1/36, B65B 3/00, B65B 3/12, B65B 3/30, B65B 55/02, F04B 13/00, F04B 15/02, F04B 23/02, F04B 43/12, F04B 49/10

(54) **ABFÜLLVORRICHTUNG ZUM FÜLLEN VON IN EINEM EINWEG-ISOLATOR VORGESEHENEN BEHÄLTER**
FILLING DEVICE FOR FILLING OF CONTAINERS IN A SINGLE-USE ISOLATOR
DISPOSITIF DE REMPLISSAGE POUR REMPLIR DES RÉCIPIENTS DANS UN ISOLATEUR À USAGE UNIQUE

(30) Priorität: 23.09.2019 DE 202019105251 U
(43) Veröffentlichungstag der Anmeldung: 03.08.2022
(73) Patentinhaber: Bausch + Ströbel SE + Co. KG, 74532 Ilshofen (DE)
(72) Erfinder: ZIMMERMANN, Markus, 74585 Rot am See (DE)
(74) Vertreter: Weickmann & Weickmann PartmbB
(86) Internationale Anmeldenummer: PCT/EP2020/075795
(87) Internationale Veröffentlichungsnummer: WO 2021/058340

(56) Entgegenhaltungen:
- WO-A1-2010/100234
- DE-A1- 102017 216 366
- DE-A1- 19 701 001

## Beschreibung

Anwendungsgebiet der vorliegenden Erfindung ist insbesondere das dosierte Abfüllen von aseptischen oder toxischen Substanzen, beispielsweise Medikamenten, in Abfüllbehälter in einer die abzufüllenden Substanzen vor Kontamination schützenden - und ein Entweichen von abzufüllender Substanz in die Umgebung vermeidenden Weise.

Bei den bisher bekannten Abfüllvorrichtungen der hier betrachteten Art besteht das Problem, dass eine möglichst genaue Erfassung der Abfüllmengen schwierig war bzw. umständliche Maßnahmen erforderten. Eine Wägung der in einem betreffenden Einweg-Isolator befindlichen Füllgutdosisaufnahmebehälter mittels einer außerhalb des Einweg-Isolators vorgesehenen Wiegeeinrichtung während eines Abfüllvorganges wie z.B. in der WO 2010/100234 A1 gezeigt, ist schwierig und liefert keine sehr sicheren Ergebnisse, da stets ein Teil der Folienwandung des Einweg-Isolators zwischen der Wiegeeinrichtung und dem betreffenden Füllgutdosisaufnahmebehälter bei der Wägung stört. Eine In-Prozess-Kontrolle der Abfüllvorgänge gestaltet sich bei einer derartigen Vorgehensweise schwierig und ungenau.

Es sind auch bereits Abfüllvorrichtungen der hier betrachteten Art diskutiert worden, bei welchen eine Wiegeeinrichtung so vorgesehen ist, dass eine Waagschale oder Waagplattform der Wiegeeinrichtung innerhalb des Einweg-Isolators positioniert ist, wohingegen die übrige Wiegeeinrichtung mit Bedienelementen, Anzeigeeinrichtung, Elektronik etc. außerhalb des Einweg-Isolators angeordnet ist, so dass über eine steril abgedichtete Steckverbindung im Bereich einer Wandung des Einweg-Isolators ein lösbares, funktionsgerechtes Zusammenstecken von Waagschale bzw. Waagplattform und Wiegeeinrichtung im Übrigen erfolgen kann. Eine solche Anordnung würde somit einen Wägevorgang erlauben, bei dem die Folienwandung des Einweg-Isolators nicht nennenswert stört. Die Waagschale wäre nach Beendigung eines betreffenden Abfüllvorganges entweder sehr sorgfältig zu reinigen - oder zusammen mit dem Einweg-Isolator zu entsorgen. Die Wiegeeinrichtung im Übrigen kann dann für weitere Abfüllvorgänge verwendet werden. Auch ein solcher Ansatz hat sich als nicht vorteilhaft praktikabel erwiesen.

Eine Abfüllvorrichtung gemäß dem Oberbegriff des Anspruchs 1 ist in DE 10 2017 216 366 A1 offenbart.

Der vorliegenden Erfindung liegt die Aufgabe zugrunde, eine Abfüllvorrichtung zum dosierten Abfüllen von flüssigem oder feinpulverförmigem Füllgut aus einem Füllgutvorratsbehälter in kontaminationsgeschützt in einem Einweg-Isolator vorgesehene Füllgutdosisaufnahmebehälter bereitzustellen, welche mit einfachen Mitteln eine gut kontrollierbare und präzise Dosierung der jeweiligen Abfüllmengen beim Abfüllvorgang ermöglicht, ohne Komponenten der Dosismessmittel mit Abfüllgut zu kontaminieren.

Hierzu weist die erfindungsgemäße Abfüllvorrichtung folgende Merkmale auf:
- einen Einweg-Isolator mit den darin vorgesehenen Füllgutdosisaufnahmebehältern,
- Mittel zur Halterung des Füllgutvorratsbehälters mit Inhalt außerhalb des Einwegisolators,
- eine steuerbare Füllgutentnahmeeinrichtung zur dosisweisen Entnahme von Füllgut aus dem Füllgutvorratsbehälter außerhalb des Einweg-Isolators,
- eine Füllgutabgabeeinrichtung innerhalb des Isolators zur dosisweisen Abgabe von Füllgut an betreffende Füllgutdosisaufnahmebehälter in dem Einwegisolator,
- eine den Füllgutvorratsbehälter und die Füllgutabgabeeinrichtung miteinander verbindende Leitungsanordnung zur Leitung von mittels der Füllgutentnahmeeinrichtung dem Füllgutvorratsbehälter entnommenem Füllgut zur Füllgutabgabeeinrichtung,
- wenigstens einen außerhalb des Einwegisolators an der Leitungsanordnung vorgesehenen Ultraschall-Durchflussmesser vom clamp-on-Typ, der außen an der Leitungsanordnung diese zumindest bereichsweise umgebend zur Erfassung der jeweiligen Durchflussmenge fixiert ist, und
- eine Steuereinrichtung zur Bemessung der jeweiligen dem Füllgutvorratsbehälter zu entnehmenden Füllgutdosis auf der Basis von Informationen des Durchflussmessers über die Durchflussmenge und zur Steuerung der Füllgutentnahmeeinrichtung.

Grundidee der vorliegenden Erfindung ist es somit mit vollständig außerhalb des Einweg-Isolators vorgesehenen und somit vor Kontamination mit Füllgut geschützten Dosismessmitteln die jeweiligen Dosismengen auf einfache Weise zu bestimmen. Mit einer solchen Vorgehensweise ist es mit einfachen Mitteln, nämlich mittels des Ultraschall-Durchflussmessers vom clamp-on-Typ in Verbindung mit der Steuereinrichtung möglich, die Dosismengen zu erfassen und mittels der Füllgutabgabeeinrichtung präzise einzustellen und zu dokumentieren. Es ist daher nicht nach jedem Abfüllvorgang erforderlich, die Dosismessmittel bzw. den Ultraschall-Durchflussmesser vom clamp-on-Typ steril zu reinigen.

Ultraschall-Durchflussmesser vom clamp-on-Typ sind an sich bekannt. Sie erfassen die Geschwindigkeit des in der Leitung strömenden Mediums mit Hilfe akustischer Wellen. Dazu benötigen sie keine nachteilig wirkenden bewegten mechanischen Teile und erfordern auch keine Querschnittsverengung der Leitung am Messort. Sie zeichnen sich insbesondere dadurch aus, dass sie mit geringstem Montageaufwand außen an die betreffende Leitung in Messbereitschaft anbringbar, insbesondere anklemmbar sind. Es können je nach Wahl des Ultraschall-Durchflussmessers zwei an sich bekannte Messprinzipien zum Einsatz kommen, nämlich das Ultraschall-Doppler-Verfahren oder das Ultraschall-Laufzeit-Verfahren. Aus den Strömungsmessinformationen des Ultraschall-Durchflussmessers integriert über die Zeit ermittelt die Steuereinrichtung die jeweilige Dosismenge.

Als Füllgutentnahmeeinrichtung dient vorzugsweise eine steuerbare Peristaltikpumpe, welche einen als Quetschschlauch vorgesehenen Leitungsbereich der Leitungsanordnung außen quetschend beaufschlagt und dabei Füllgut in dem Quetschschlauch in Soll-Flussrichtung verschiebt. Dabei kommen die Komponenten der Peristaltikpumpe nicht mit Füllgut unmittelbar in Kontakt. Die Peristaltikpumpe ist mittels der Steuereinrichtung steuerbar, so dass sie start- und stoppbar ist, um einen jeweiligen Abfüllvorgang zu beginnen und zu beenden.

Der Einweg-Isolator kann in an sich bekannter Weise eine den IsolatorInnenraum kontaminationsgeschützt gegenüber der Außenumgebung isolierende, vorzugsweise durchsichtige Folienwand aus Kunststofffolie aufweisen. Derartige Einweg-Isolatoren sind relativ preisgünstig und nach Gebrauch sicher und in geordneter Weise zu entsorgen.

Vorzugsweise weist der Einweg-Isolator in an sich bekannter Weise Handschuheingriffsmittel zur Handhabung von Gegenständen innerhalb des Einweg-Isolators, insbesondere zur Handhabung der Füllgutdosisaufnahmebehälter durch eine Bedienungsperson von außen auf. Die Bedienungsperson kann mittels der Handschuheingriffsmittel beispielsweise Füllgutdosisaufnahmebehälter in eine Soll-Füllstellung relativ zur Füllgutabgabeeinrichtung in dem Einweg-Isolator positionieren oder/und die Füllgutaufnahmebehälter nach Abfüllung mit Stopfen, Drehverschlüssen oder dgl. in dem Einweg-Isolator verschließen.

Gemäß einer vorteilhaften Weiterbildung der Erfindung weist der Einweg-Isolator Mittel zur sterilen Durchführung der Leitungsanordnung durch die Isolatorwand auf, sodass Füllgut mittels der Leitungsanordnung von dem außerhalb des Einwegisolators vorgesehenen Füllgutvorratsbehälter zu der in dem Einwegisolator vorgesehenen Abgabeeinrichtung ohne Gefahr der Kontamination des Außenbereichs des Einweg-Isolators gelangen kann.

Die Mittel zur sterilen Durchführung der Leitungsanordnung durch die Isolatorwand können Steckverbindungsmittel sein, welche einen innerhalb des Einweg-Isolators vorgesehenen Leitungsabschnitt mit einem außerhalb des Einwegisolators zu diesem hinführenden Leitungsabschnitt im bestimmungsgemäßen Steckverbindungszustand nach außen hin steril abdichtend verbinden. Beim Lösen der Steckverbindung dichten die am Einweg-Isolator vorgesehenen Steckverbindungsmittel den Übergang steril ab.

Mit einer weiteren vorteilhaften Ausgestaltung der Erfindung weist der Einweg-Isolator in seiner Wand Anschlussmittel zum Anschließen äußerer Leitungen, insbesondere Schutzgasleitungen, für ein dem Innenraum des Einweg-Isolators kontaminationsgeschützt zuzuführendes Medium, wie etwa CO₂ oder Stickstoff, oder Reinluft, wie etwa mittels Filtern, z.B. HEPA-Filtern gefilterte, laminar strömende Luft, auf. Auch in diesem Fall ist es so, dass die dem Einweg-Isolator zugeordneten Anschlussmittel steril dicht abschließen, falls keine äußere Leitung angeschlossen ist.

Bei der Füllgutabgabeeinrichtung handelt es sich vorzugsweise um eine Füllnadel oder ggf. mehrere Füllnadeln, über welche das Füllgut in die Füllgutdosisaufnahmebehälter eingebracht wird.

Bei dem Flüssigkeitsvorratsbehälter kann es sich beispielsweise um einen Kunststofffolienbeutel mit einem unteren Anschluss für die Leitungsanordnung handeln.

Bei den Füllgutdosisaufnahmebehältern kann es sich beispielsweise um Reagenzfläschchen wie z.B. Medikamentenfläschchen, Reagenzröhrchen und dgl. handeln. Vorzugsweise sind in dem Einweg-Isolator Verschlusselemente zum Verschließen der Füllgutdosisaufnahmebehälter vorgesehen, so dass die befüllten Füllgutdosisaufnahmebehälter noch in dem Einweg-Isolator dicht verschlossen werden können, bevor sie entnommen werden.

Die Steuereinrichtung ist gemäß einer besonders bevorzugten Ausführungsform der Erfindung dazu eingerichtet, einen Wert der jeweiligen Dosismenge pro abgefülltem Füllgutdosisaufnahmebehälter, insbesondere das erfasste Dosisgewicht, in Zuordnung zu den betreffenden abgefüllten Füllgutdosisaufnahmebehältern zu speichern, um eine In-Prozess-Kontrolle zu realisieren und somit die Möglichkeit der laufenden Überwachung der Qualität der Abfüllvorgänge zu schaffen.

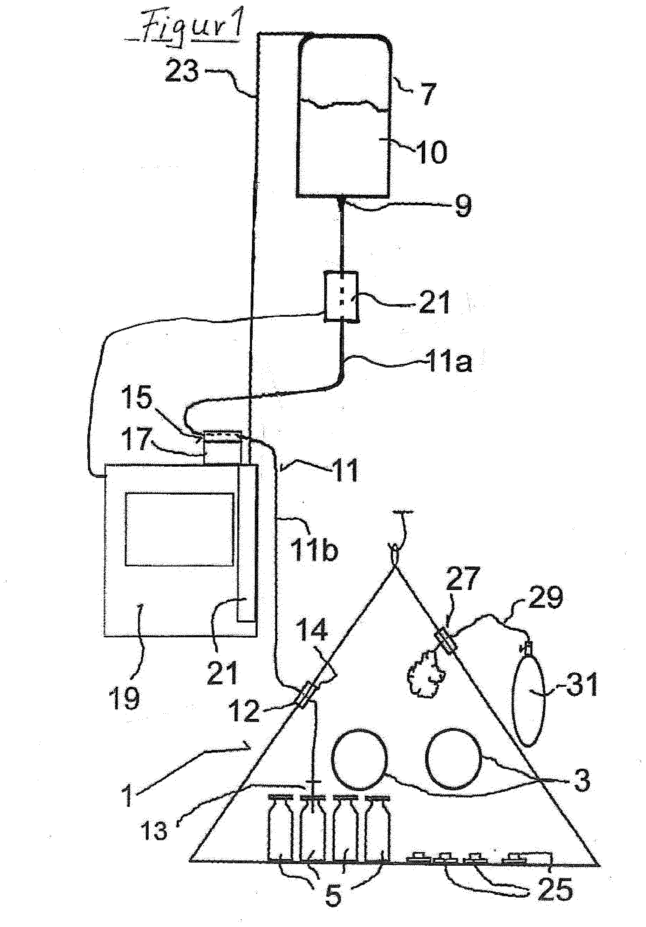

Ein Ausführungsbeispiel der Erfindung wird nachstehend unter Bezugnahme auf die schematische Darstellung einer Abfüllvorrichtung nach der Erfindung gemäß Figur 1 näher erläutert.

Mit 1 ist in Figur 1 ein Einweg-Isolator bezeichnet, bei dem es sich um eine Art geschlossenes Zelt mit Wänden aus einer durchsichtigen Kunststofffolie handelt. Der Einwegisolator hat zwei Handschuheingriffslöcher 3 an denen in den Raumbereich des Einweg-Isolators 1 hineinreichende Handschuhe (nicht gezeigt) aus einem flexiblen Kunststoffmaterial abdichtend angebracht sind (Handschuhboxprinzip). Eine Bedienungsperson kann in die Handschuheingriffslöcher 3 eingreifen, um dann unter Verwendung der Handschuhe Gegenstände in dem Einweg-Isolator 1 zu bewegen und zu handhaben. Es können ein Partikelzähler oder/und Keimsammler im Einweg-Isolator vorgesehen sein, um die Reinraumqualität darin zu überwachen bzw. sicherzustellen.

In dem Einwegisolator 1 befinden sich Fläschchen, z.B. Phiolen, als Füllgutdosisaufnahmebehälter 5, in denen ein beispielsweise toxisches Flüssigmaterial als Füllgut dosiert eingefüllt werden soll. Die Einfüllvorgänge sollen so erfolgen, dass der Außenraum des Einweg-Isolators 1 nicht mit Füllgutmaterial in irgendeiner Weise kontaminiert wird.

Das Füllgut befindet sich zunächst in einem Füllgutvorratsbehälter 7 außerhalb des Einweg-Isolators 1. Bei dem Füllgutvorratsbehälter 7 kann es sich beispielsweise um einen Folienbeutel handeln, welcher an seiner Unterseite einen Füllgutauslass 9 mit einem nach außen hin abdichtend daran angeschlossenen Leitungsabschnitt 11a einer Leitungsanordnung 11 aufweist, welche dazu dient, Füllgut aus dem Vorratsbehälter 7 zu dem Einwegisolator 1 und weiter darin zu einer Füllnadel 13 zu leiten, welche die Funktion einer Füllgutabgabeeinrichtung innerhalb des Einwegisolators 1 hat. Die Leitungsanordnung 11 besteht im Wesentlichen aus einem flexiblen Kunststoffschlauch, welcher bei 15 durch eine Peristaltikpumpe 17 geführt ist und dort den Quetschschlauschabschnitt der Peristaltikpumpe 17 bildet, an welchem das darin befindliche Füllgutmaterial durch einen Schlauchquetschvorgang in Soll-Flussrichtung zu dem Einweg-Isolator 1 hin vorgetrieben wird. Daran schließt sich ein Leitungsabschnitt 11b an, der zum Einweg-Isolator 1 führt. Die Leitungsanordnung 11 durchtritt bei 12 die Wand des Einweg-Isolators 1 in abgedichteter Weise, wozu entsprechende Mittel 14 zur sterilen Durchführung der Leitungsanordnung 11 durch die IsolatorWand 14 vorgesehen sind. Dies können z.B. auch Steckverbindungsmittel sein.

Die Peristaltikpumpe 17 ist mittels einer Steuereinrichtung 19 steuerbar, d.h. gezielt zur Vorbewegung des Füllgutmaterials startbar und zum Stoppen der Vorbewegung des Füllgutmaterials stoppbar, sodass auf diese Weise eine Dosierung des zwischen Pumpenstart und Pumpenstopp von der Peristaltikpumpe 17 weitergeförderten Materials möglich ist.

An einem Halterungsstab 23 ist der Füllgutvorratsbehälter 7 angehängt.

Zur Erfassung der jeweiligen Dosismengen ist ein an sich bekannter Ultraschall-Durchflussmesser 21 vom clamp-on-Typ an der Leitungsanordnung 11 angeordnet. Er ist im Beispielsfall außen an dem Leitungsabschnitt 11a diesen umgebend angebracht und zur Abgabe seiner Meßinformationen an die Steuereinrichtung 19 elektrisch mit dieser verbunden. Der Ultraschall-Durchflussmesser 21 erfasst die jeweilige Strömungsgeschwindigkeit des in dem Leitungsabschnitt 11a strömenden Füllgutes bei Füllgutdosierung und die Steuereinrichtung ermittelt über die zeitliche Integration der Messinformation die Dosismenge der jeweiligen abzufüllenden Dosis.

Ein jeweiliger Abfüllvorgang kann dann in der Weise erfolgen, dass die Steuereinrichtung 19 den Abfüllvorgang durch entsprechende Ansteuerung der Peristaltikpumpe startet und beginnend mit dem Starzeitpunkt die Strömungsgeschwindigkeitsmeßinformationen des Ultraschall-Durchflussmessers 21 über die Zeit integriert, bis sie das Erreichen der gewünschten Dosismenge feststellt, um damit dann den aktuellen Abfüllvorgang durch entsprechende Ansteuerung der Peristaltikpumpe zu stoppen. Ggf. kann der Ultraschall-Durchflussmesser in einer Variante bereits Mittel zu zeitlichen Integration der Meßinformationen aufweisen und somit Dosismengen bestimmen.

Eine Bedienungsperson kann dann durch Eingriff in die Handschuhe bei 3 das befüllte Fläschchen 5 mit einem in dem Einwegisolator 1 bereitgehaltenen Verschlussstopfen 25 verschließen und gegebenenfalls ein nächstes zu befüllendes Fläschchen 5 in Position zu der Füllnadel 13 bringen, so dass bei einem nächsten Füllvorgang dieses Fläschchen mit einer Füllgutdosis befüllt wird.

Dies kann in entsprechender Weise fortgesetzt werden, bis alle Fläschchen 5 dosiert, befüllt und verschlossen worden sind.

Die Steuereinrichtung 19 ist dazu eingerichtet, in Zuordnung zu jedem befülltem Füllgutdosisaufnahmebehälter 5 die darin abgefüllte Dosismenge, insbesondere das Dosisgewicht, zu speichern, um so eine In-Prozess-Kontrolle zu realisieren. Auf diese Weise kann auch ohne Weiteres erkannt werden, ob unter den abgefüllten Füllgutdosisaufnahmebehältern 5 welche dabei sind, bei denen die Abfüllmenge außerhalb eines gewissen Toleranzbereichs liegt. Auch kann die Abfüllmenge des Füllgutes je nach Dosierung nachgeregelt werden. Je nach Ergebnis der Überwachung der abgefüllten Dosismengen innerhalb der Toleranzgrenzen können die Umdrehungen der Peristaltikpumpe entsprechend optimiert werden.

Bei 27 weist der Einweg-Isolator 1 in seiner Wand Anschlussmittel zum Anschließen äußerer Leitungen, hier einer Schutzgasleitung 29 auf, an dem eine betreffende Schutzgasquelle 31 angeschlossen ist.

Mittels dieser Anordnung kann Schutzgas, etwa Reinluft, wie etwa mittels Filtern, z.B. HEPA-Filtern gefilterte laminar strömende Luft, CO2 oder Stickstoff, in den Innenraum des Einweg-Isolators 1 eingebracht werden, um dort auch einen gewissen Überdruck zu erzeugen, welcher verhindert, dass nach jeweiligem Stopp der Peristaltikpumpe 17 eine Nachlaufmenge aus der Füllnadel 13 austritt.

Innerhalb des Einwegisolators 1 können auch weitere Elemente bereitgestellt sein, etwa Kappen oder/und entsprechendes Werkzeug, beispielsweise eine Einweg-Zange und dgl..

## Patentansprüche

1. Abfüllvorrichtung zum dosierten Abfüllen von flüssigem oder feinpulverförmigem Füllgut (10) aus einem Füllgutvorratsbehälter (7) in kontaminationsgeschützt in einem Einwegisolator (1) vorgesehene Füllgutdosisaufnahmebehälter (5),
umfassend
- den Einwegisolator (1) mit den darin vorgesehenen Füllgutdosisaufnahmebehältern (5),
- Mittel (23) zur Halterung des Füllgutvorratsbehälters (7) mit Inhalt außerhalb des Einwegisolators (1),
- eine steuerbare Füllgutentnahmeeinrichtung (17) zur dosisweisen Entnahme von Füllgut (10) aus dem Füllgutvorratsbehälter (7) außerhalb des Einwegisolators (1),
- eine Füllgutabgabeeinrichtung (13) innerhalb des Einwegisolators (1) zur dosisweisen Abgabe von Füllgut (10) an betreffende Füllgutdosisaufnahmebehälter (5) in dem Einwegisolator (1),
- eine den Füllgutvorratsbehälter (7) und die Füllgutabgabeeinrichtung (13) miteinander verbindende Leitungsanordnung (11) zur Leitung von mittels der Füllgutentnahmeeinrichtung (17) dem Füllgutvorratsbehälter (7) entnommenem Füllgut (10) zur Füllgutabgabeeinrichtung (13),
**dadurch gekennzeichnet, dass** die Abfüllvorrichtung weiterhin umfasst
- wenigstens einen außerhalb des Einwegisolators an der Leitungsanordnung vorgesehenen Ultraschall-Durchflussmesser vom clamp-on-Typ, der außen an der Leitungsanordnung diese zumindest bereichsweise umgebend zur Erfassung der jeweiligen Durchflussmenge fixiert ist,
- eine Steuereinrichtung (19) zur Bemessung der jeweiligen dem Füllgutvorratsbehälter (7) zu entnehmenden Füllgutdosis auf der Basis von Informationen des Durchflussmessers über die Durchflussmenge und zur Steuerung der Füllgutentnahmeeinrichtung (17).

2. Abfüllvorrichtung nach Anspruch 1, wobei die Füllgutentnahmeeinrichtung (17) als steuerbare Peristaltikpumpe ausgebildet ist.

3. Abfüllvorrichtung nach wenigstens einem der vorher gehenden Ansprüche, wobei der Einwegisolator (1) eine den Isolatorinnenraum kontaminationsgeschützt gegenüber der Außenumgebung isolierende, vorzugsweise durchsichtige Folienwand aus Kunststofffolie aufweist.

4. Abfüllvorrichtung nach wenigstens einem der vorher gehenden Ansprüche, wobei der Einwegisolator (1) Handschuheingriffsmittel (3) zur Handhabung von Gegenständen (5, 13, 25) innerhalb des Einwegisolators (1) , insbesondere der Füllgutdosisaufnahmebehälter (5), durch eine Person von außen.

5. Abfüllvorrichtung nach wenigsten einem der vorher gehenden Ansprüche, wobei der Einwegisolator (1) Mittel (12,14) zur sterilen Durchführung der Leitungsanordnung (11) durch die Isolatorwand aufweist.

6. Abfüllvorrichtung nach wenigstens einem der vorher gehenden Ansprüche, wobei der Einwegisolator (1) in seiner Wand Anschlussmittel (27) zum Anschließen äußerer Leitungen 29), insbesondere Schutzgasleitungen, für ein dem Innenraum des Einwegisolators (1) kontaminationsgeschützt zuzuführendes Medium aufweist.

7. Abfüllvorrichtung nach wenigstens einem der vorher gehenden Ansprüche, wobei die Füllgutabgabeeinrichtung (13) eine Füllnadel aufweist.

8. Abfüllvorrichtung nach wenigstens einem der vorher gehenden Ansprüche, wobei der Flüssigkeitsvorratsbehälter (7) als Kunststofffolienbeutel mit einem unteren Anschluss (9) für die Leitungsanordnung (11) ausgebildet ist.

9. Abfüllvorrichtung nach wenigstens einem der vorher gehenden Ansprüche, wobei es sich bei den Füllgutdosisaufnahmebehältern (5) um Reagenzfläschchen oder/ und Medikamentenfläschchen handelt.

10. Abfüllvorrichtung nach wenigstens einem der vorher gehenden Ansprüche, wobei in dem Einwegisolator (1) Verschlusselemente (25) zum Verschließen der Füllgutdosisaufnahmebehälter (5) vorgesehen sind.

11. Abfüllvorrichtung nach wenigstens einem der vorher gehenden Ansprüche, wobei die Steuereinrichtung (19) dazu eingerichtet ist, einen Wert der jeweiligen Dosismenge pro abgefülltem Füllgutdosisaufnahmebehälter (5), insbesondere das erfasste Dosisgewicht, in Zuordnung zu den betreffenden abgefüllten Füllgutdosisaufnahmebehältern (5) zu speichern, um eine In-Prozess-Kontrolle zu realisieren.

## Claims

1. Filling device for metered filling of liquid or fine powdery filling material (10) from a filling material storage container (7) into filling material dose receiving containers (5) provided in a contamination-protected manner in a single-use isolator (1),
comprising
- the single-use isolator (1) having the filling material dose receiving containers (5) provided therein,
- means (23) for holding the filling material storage container (7) with content outside the single-use isolator (1),
- a controllable filling material removal device (17) for removal, by dose, of filling material (10) from the filling material storage container (7) outside of the single-use isolator (1),
- a filling material dispensing device (13) within the single-use isolator (1) for dispensing, by dose, filling material (10) to relevant filling material dose receiving containers (5) in the single-use isolator (1),
- a line arrangement (11) which interconnects the filling material storage container (7) and the filling material dispensing device (13) and is intended for conducting filling material (10) removed from the filling material storage container (7), by the filling material removal device (17), to the filling material dispensing device (13),
**characterised in that** the filling device further comprises
- at least one ultrasound flowmeter, of the clamp-on type, which is provided outside of the single-use isolator, on the line arrangement, and which is fixed on the outside of the line arrangement in a manner surrounding it at least in regions, for acquiring the respective flow amount,
- a controller (19) for measuring the respective filling material dose to be removed from the filling material storage container (7), on the basis of information of the flow meter relating to the flow amount, and for controlling the filling material removal device (17).

2. Filling device according to claim 1, wherein the filling material removal device (17) is configured as a controllable peristaltic pump.

3. Filling device according to at least one of the preceding claims, wherein the single-use isolator (1) comprises a preferably transparent film wall, made of plastics film, which isolates the isolator interior in a contamination-protected manner against the external surroundings.

4. Filling device according to at least one of the preceding claims, wherein the single-use isolator (1) glove engagement means (3) for handling objects (5, 13, 25) within the single-use isolator (1), in particular the filling material dose receiving containers (5), by a person from the outside.

5. Filling device according to at least one of the preceding claims, wherein the single-use isolator (1) comprises means (12, 14) for conducting the line arrangement (11) in a sterile manner through the isolator wall.

6. Filling device according to at least one of the preceding claims, wherein the single-use isolator (1) comprises connection means (27) in its wall for connection of outside lines (29), in particular protective gas lines, for a medium that is to be supplied to the interior of the single-use isolator (1) in a contamination-protected manner.

7. Filling device according to at least one of the preceding claims, wherein the filling material dispensing device (13) comprises a filling needle.

8. Filling device according to at least one of the preceding claims, wherein the liquid storage container (7) is formed as a plastics bag having a lower connection (9) for the line arrangement (11).

9. Filling device according to at least one of the preceding claims, wherein the filling material dose receiving containers (5) are reagent bottles and/or medicine bottles.

10. Filling device according to at least one of the preceding claims, wherein closure elements (25) are provided in the single-use isolator (1) for closing the filling material dose receiving containers (5).

11. Filling device according to at least one of the preceding claims, wherein the controller (19) is configured for storing a value of the respective dose amount per filled filling material dose receiving container (5), in particular the acquired dose weight, in association with the relevant filled filling material dose receiving containers (5), in order to implement in-process control.

## Revendications

1. Dispositif de remplissage pour transvaser des doses d'un produit liquide ou en poudre fine (10) à transvaser depuis un réservoir de produit (7) vers des récipients de réception de dose de produit (5) prévus dans un isolateur jetable (1) en étant protégés contre les contaminations,
comprenant
- l'isolateur jetable (1) avec les récipients de réception de dose de produit (5) prévus dans celui-ci,
- des moyens (23) pour maintenir le réservoir de produit (7) avec son contenu à l'extérieur de l'isolateur jetable (1),
- un dispositif de prélèvement de produit (17) pouvant être commandé pour prélever des doses de produit (10) dans le réservoir de produit (7) à l'extérieur de l'isolateur jetable (1),
- un dispositif de distribution de produit (13), situé à l'intérieur de l'isolateur jetable (1), pour distribuer des doses de produit (10) à des récipients de réception de dose de produit (5) correspondants situés dans l'isolateur jetable (1),
- un ensemble d'acheminement (11), reliant entre eux le réservoir de produit (7) et le dispositif de distribution de produit (13), pour acheminer le produit à transvaser, prélevé dans le réservoir de produit (7) au moyen du dispositif de prélèvement de produit (17), vers le dispositif de distribution de produit (13),
**caractérisé en ce que** le dispositif de remplissage comprend en outre
- au moins un débitmètre à ultrasons de type non intrusif (dit « clamp-on »), prévu sur l'ensemble d'acheminement à l'extérieur de l'isolateur jetable, qui est fixé à l'extérieur sur l'ensemble d'acheminement en l'entourant au moins localement pour détecter le débit respectif,
- un dispositif de commande (19) pour dimensionner la dose de produit respective, à prélever dans le réservoir de produit (7), à l'aide d'informations du débitmètre concernant le débit, et pour commander le dispositif de prélèvement de produit (17).

2. Dispositif de remplissage selon la revendication 1,
dans lequel le dispositif de prélèvement de produit (17) est conçu comme une pompe péristaltique à commander.

3. Dispositif de remplissage selon l'une au moins des revendications précédentes,
dans lequel l'isolateur jetable (1) présente une paroi de film constituée d'un film en matière plastique, de préférence transparente, qui isole l'espace intérieur de l'isolateur vis-à-vis de l'environnement extérieur en le protégeant contre les contaminations.

4. Dispositif de remplissage selon l'une au moins des revendications précédentes,
dans lequel l'isolateur jetable (1) comprend des moyens de préhension en forme de gants (3) pour permettre à un utilisateur de manipuler de l'extérieur des objets (5, 13, 25) à l'intérieur de l'isolateur jetable (1), en particulier des récipients de réception de dose de produit (5).

5. Dispositif de remplissage selon l'une au moins des revendications précédentes,
dans lequel l'isolateur jetable (1) comprend des moyens (12, 14) pour le passage stérile de l'ensemble d'acheminement (11) à travers la paroi de l'isolateur.

6. Dispositif de remplissage selon l'une au moins des revendications précédentes,
dans lequel l'isolateur jetable (1) présente dans sa paroi des moyens de raccordement (27) pour raccorder des conduits extérieurs (29), en particulier des conduits de gaz protecteur, pour un fluide à amener à l'espace intérieur de l'isolateur jetable (1) en étant protégé contre les contaminations.

7. Dispositif de remplissage selon l'une au moins des revendications précédentes,
dans lequel le dispositif de distribution de produit (13) comprend une aiguille de remplissage.

8. Dispositif de remplissage selon l'une au moins des revendications précédentes,
dans lequel le réservoir de liquide (7) est réalisé sous la forme d'un sachet en film plastique ayant un raccord inférieur (9) pour l'ensemble d'acheminement (11).

9. Dispositif de remplissage selon l'une au moins des revendications précédentes,
dans lequel les récipients de réception de dose de produit (5) sont des flacons de réactifs ou/et des flacons de médicaments.

10. Dispositif de remplissage selon l'une au moins des revendications précédentes,
dans lequel des éléments de fermeture (25) sont prévus dans l'isolateur jetable (1) pour fermer les récipients de réception de dose de produit (5).

11. Dispositif de remplissage selon l'une au moins des revendications précédentes,
dans lequel le dispositif de commande (19) est conçu pour mémoriser une valeur de la quantité de dose respective par récipient de réception de dose de produit (5), en particulier le poids détecté d'une dose, en association avec les récipients de réception de dose de produit (5) remplis correspondants, afin de réaliser un contrôle en cours de processus.
